# EUROPEAN PATENT SPECIFICATION

(11) **EP 2 989 494 B1**
(45) Date of publication and mention of the grant of the patent: **03.06.2020**
(21) Application number: 13719481.7
(22) Date of filing: 24.04.2013
(51) Int. Cl.: G02B 6/44, H02G 15/007

(54) **DEVICE, ASSEMBLY AND METHOD FOR SECURING AND RETAINING AN OPTICAL CABLE**
VORRICHTUNG, ANORDNUNG UND VERFAHREN ZUM BEFESTIGEN UND HALTEN EINES OPTISCHEN KABELS
DISPOSITIF, ENSEMBLE ET PROCÉDÉ DE FIXATION ET DE RETENUE D'UN CÂBLE OPTIQUE

(43) Date of publication of application: 02.03.2016
(73) Proprietor: Prysmian S.p.A., 20126 Milano (IT)
(72) Inventor: ABBIATI, Fabio, I-20126 Milano (IT)
(74) Representative: Colombo, Stefano Paolo
(86) International application number: PCT/EP2013/058446
(87) International publication number: WO 2014/173439

(56) References cited:
- WO-A2-2008/048935
- WO-A2-2012/074684
- WO-A2-2012/074685
- DE-U1-202005 011 461

## Description

### Technical field

The present invention relates to the field of apparatuses and components for the installation of optical (access) networks. In particular, the present invention relates to a device for securing and retaining an optical cable comprising a retention arrangement for retention of flexible strength members of an optical cable. The present invention further relates to an assembly comprising an optical cable and a device for securing and retaining the flexible strength members. The present invention still further relates to a method for securing and retaining an optical cable and retaining flexible strength members thereof.

### Background art

An FTTH ("Fiber To The Home") network is an optical access network providing a number of end users with broadband communication services, i.e. with services requiring data transmission at a rate of some hundreds of Mbit/s or more.

Typically, an FTTH network comprises a distribution cabinet which cooperates with an access network and which is typically located in the basement of a building where the end users reside. An optical trunk cable, that will be termed herein after "riser cable", exits the distribution cabinet and runs through the building from the basement up to all the building floors.

At each floor of the building, the riser cable may be optically connected to one or more optical cables that will be termed hereinafter "drop cables". Each drop cable is typically terminated at its far end by a respective customer termination box located within or in proximity of the apartment or office of an end user.

An optical connection between a first optical fiber (e.g. an optical fiber of a riser cable) and a second optical fiber (e.g. an optical fiber of a drop cable) is generally termed "splice" or "optical splice".

At each floor, the optical connection(s) between the riser cable and the drop cable(s) are typically arranged in a splice enclosure, for instance a floor termination box or a floor riser box.

A splice enclosure, as well as a termination box or the like, may comprise a base and a cover. The base of a splice enclosure typically has an area suitable for housing the ends of the drop cables and a path or channel suitable for housing a portion of the riser cable, so that it passes through the splice enclosure. Openings allowing the riser cable to enter and exit the riser box and allowing the ends of the drop cables to be inserted into the riser box may be provided in the sidewalls of the base.

U.S. Patent Publication No. 2009/0252472 discloses a fiber optic splice enclosure with a management tray including cable retention and/or securement arrangements for mechanically securing the cables to the splice enclosure.

One embodiment of U.S. Patent Publication No. 2009/0252472 teaches an anchoring screw-type fastener positioned adjacent to a respective cable retention block. Strength members (e.g., a length of aramid yarn) of one of the drop cables are shown wrapped around and anchored to the fastener, which is secured to the base of the fiber management tray by a screw driver. Anchoring the strength members to the fiber management tray by the fastener inhibits the cable from being pulled axially out from the splice enclosure.

A second embodiment of U.S. Patent Publication No. 2009/0252472 teaches cable retention blocks working in combination with compression inserts to mechanically secure the drop cables to the splice enclosure. The compression inserts define central passages that extend through the compression inserts and that are sized to receive jacketed drop cables. The compression inserts also define a plurality of strength member passages and access slots that allow strength members (e.g., aramid yarn) to be inserted into the strength member passages. Strength members from the drop cable can be grouped together, routed back through at least one of the strength member passages, and wrapped around the exterior of the plug portion prior to inserting the compression insert within its corresponding retention opening. In this manner, further retention of the drop cable is provided.

WO Patent Publication No. 2007/009593 relates to an optical waveguide distribution device with holding elements for the strain elements which are integrated in the cable sheath of an optical waveguide cable. The holding elements are integral with the base of the distribution device. The holding elements can be covered by a cap.

WO Patent Publication No. 2008/048935 relates to an optical cable retention device including a body having first and second opposing portions and a hinge disposed therebetween. The cable retention device is configured to clamp onto the jacket portion of an optical fiber cable and also secure the strength members of the optical fiber cable. Protrusions are provided about which strength members can be folded or wrapped about.

WO 2009/10102912 A1 discloses a fiber optic splice enclosure.

CA 2 614 937 A1 discloses an optical fiber distribution device.

WO2012/074684 and WO2012/074685 disclose a strain relief device.

### Summary of the invention

The Applicant has perceived that the compression inserts of a second embodiment of U.S. Patent Publication No. 2009/0252472, disadvantageously, are arranged coaxially with the cable and therefore render the cable bulky. This, in turn, disadvantageously results in an enclosure of a large size. Moreover, the compression inserts do not allow securing the strength members independently of the cable path because the compression insert is arranged coaxial with the cable. In other words, the compression insert is part of an arrangement which engages the outer sheath.

The Applicant has also perceived that the holding elements of WO Patent Publication No. 2007/009593 are integral with the base of the distribution device and are not detachable therefrom. This renders highly inconvenient the step of winding the strain elements around the holding elements which are small and arranged one close to the others.

The Applicant has also perceived that winding the strength members around the protrusions of WO Patent Publication No. 2008/048935 is inconvenient due to the fact that they are close one to the other and also because they are connected to the arrangement for retaining the optical fiber cable in the same position.

The Applicant has perceived that, disadvantageously, the problem of the known arrangements is that the installer has to calculate in advance the length of the flexible strength members to be used for providing a retaining force for the cable. In other words, the installer has to cut the flexible strength members at a certain precise and predetermined length in order to assure that, in use, the flexible strength members are under tension.

In view of the above, the applicant found that it is convenient to have a device for securing and retaining an optical cable comprising an anchor point (for example a reel) where the strength members of the optical cable are wound thereon and a clip for covering said anchor point wherein the clip is dimensioned in order to cover the anchor point and hold the strength members by friction.

Therefore, the present invention relates to a device for securing and retaining an optical cable extended principally along a longitudinally direction, said optical cable comprising optical fiber units, strength members and an outer sheath, wherein the device comprises a reel configured to receive at least one turn of said strength members, and a clip configured to cooperate with said reel for maintaining said at least one turn of said strength members around said reel.

In order to increase the cable retention force, the device can also comprises a belay point where the strength members are wound before reaching the anchor point.

Profitably, the length of flexible strength members is not critical as in prior art arrangements. This means that excess flexible strength members can be accommodated by making one (or further) turns on the belay element and/or on the reel. This is advantageous for installers.

In addition, when the length of the flexible strength members is excessive and it is not convenient to make several turns on the belay element and/or on the reel (because such belay element and reel will become too bulky), the length in excess can be cut at the end of the process, when the clip is in position and the flexible strength members cannot become unrolled.

Profitably, the device could be embodied as separate part to be connected to an enclosure for housing and fastening an optical fiber cable. The enclosure may be, for instance, a riser box, a termination box or any enclosure wherein optical splices may be housed. Alternatively, the device could be integral with the enclosure. As a further alternative, the device could be a component not configured for being connected to an enclosure.

According to an aspect, the present invention provides a device for securing and retaining an optical cable, the optical cable comprising optical fiber units, flexible strength members and an outer sheath, the device comprising: a reel configured to receive at least one turn of the strength members, and a clip configured to cooperate with the reel for maintaining the at least one turn of the strength members around the reel. The optical cable mainly extends along a longitudinal direction. The device further comprises a belay element configured to deviate the flexible strength members of the cable from the longitudinal direction towards the reel.

The device may further comprise a seat for the optical cable outer sheath, the belay element being configured to receive at least a portion of a turn of the strength members.

The strength members exit from a cut edge of the outer sheath of the optical cable; preferably, the belay element is at a distance from the seat and it is positioned beyond the seat with respect to the cut edge.

The belay element may comprise a projecting element or a notch.

The belay element may comprise a mushroom-shaped element with a stem and an enlarged head.

The reel may comprise an elongate stem and an elongate enlarged head.

The elongate stem of the reel may comprise two elongate substantially parallel surfaces.

The clip may be substantially "C" shaped and may comprise facing teeth which, in use, press towards the parallel surfaces of the stem of the reel for avoiding unrolling of the flexible strength members from the reel stem.

The device may comprise through holes for securing clamps in order to secure the optical cable outer sheath to the seat.

According to another aspect, it is provided an assembly comprising: a device as said above and an optical cable, wherein strength members exiting from a cut edge of the outer sheath of the optical cable are arranged around the reel, and wherein the clip is fittable on the reel for avoiding unrolling of the strength members from the reel.

The belay element may be arranged so that the strength members deviate from the longitudinal direction of the optical cable at the seat where it is secured to the device.

According to another aspect it is provided a method for securing and retaining an optical cable, wherein the optical cable mainly extends along a longitudinal direction and comprises optical fiber units, flexible strength members and an outer sheath, the method comprising the steps of: cutting the outer sheath of the cable and extracting at least a portion of strength members; securing the optical cable to a device, wherein the device further comprises a belay element; reeling the at least a portion of flexible strength members around a reel of the device, thus forming one or more turns of flexible strength members around a periphery of the reel; fitting a clip on the reel for maintaining the one or more turns of flexible strength members around the periphery of the reel.

The method may further comprise the step of turning the at least one portion of flexible strength members around a belay element of the device.

The turning may comprise winding the flexible strength members around a projecting belay element.

The turning may comprise inserting the strength members in a notch.

The reeling may comprise reeling the at least a portion of strength members around an elongate reel.

The step of fitting a clip on the reel may comprise slidingly fitting a C shaped clip on the elongate reel so that free ends of the C shaped clip resiliently cooperate with a peripheral surface of said elongate reel.

### Brief description of the drawings

The present invention will become fully clear by reading the following detailed description, given by way of example and not of limitation, to be read by referring to the accompanying drawings, wherein:
- Figures 1a and 1b are diagrammatic representations of a device according to a first example of the present invention, wherein the optical cable and its strength members are not shown;
- Figures 1c and 1d show the device of the first example with the optical cable and the strength members diagrammatically represented;
- Figures 2a and 2b are diagrammatic representations of the device of Figures 1a and 1b in the final retention configuration with clips fitted on the reels, without the flexible strength members for improving clarity;
- Figures 3a, 3b and 3c are diagrammatic representations of a device according to a second example of the present invention (optical cable and strength members are schematically shown only in Figure 3c);
- Figures 4a, 4b, 4c and 4d are diagrammatic representations of the device of Figures 3a, 3b and 3c in the final retention configuration with clip fitted on the reel, without the flexible strength members for improving clarity;
- Figures 5a, 5b and 5c are diagrammatic representations of a device according to a third example of the present invention, wherein the optical cable and its strength members are not shown;
- Figures 5d and 5e show the device of the third example with the optical cable and the strength members diagrammatically represented;
- Figures 6a and 6b are diagrammatic representations of the device of Figures 5a, 5b and 5c in the final retention configuration with clip fitted on the reel, without the flexible strength members for improving clarity;
- Figure 7 is an axonometric partial view of an enclosure configured for cooperating with the device according to the third example; and
- Figures 8a, 8b, 8c and 8d are diagrammatic representations of a clip of the device according to the third example.

### Detailed description

The device of the present invention may be embodied either in the form of a separate part, or in the form of an enclosure or in the form of a component cooperating with (connectable to) an enclosure of the like.

For the purposes of the present description and claims an optical cable is deemed to be any optical cable comprising one or more optical fiber units, an outer sheet and flexible strength members.

A fiber unit can be defined as an assembly comprising a one (or more) optical fiber(s) which is constituted by a glass core, a glass cladding, a single or dual coating layer and an outer layer surrounding the said one (or more) optical fiber(s) in order to protect the overall optical fiber(s) from damage.

Further, the flexible strength members are provided for improving mechanical properties of the cable. Possibly, such flexible strength members are arranged radially externally of the optical fiber unit.

Flexible strength members may comprise aramidic yarns or the like.

For the purposes of the present invention, the "flexible strength members" comprises a plurality of yarns, possibly arranged as a bundle or the like, which are exposed from the cable after carrying out a cut of the outer sheath. Such plurality of yarns could be all the yarns of the optical cable or a fraction of all the yarns of the optical cable.

As said above, for instance when an optical cable is terminated inside an enclosure, cable retention force is obtained by securing the flexible strength members to the enclosure.

According to the present invention, it is provided a device comprising a reel and a clip, wherein the reel is configured for receiving at least one turn of flexible strength members (or at least one part of the flexible strength members) and wherein said clip is configured for maintaining said at least one turn of flexible strength members around said reel. The device may comprise a belay element, wherein the belay element is configured for receiving at least a portion of a turn of flexible strength members.

While the present invention may be embodied in several ways, three examples of the invention will be described in detail here below.

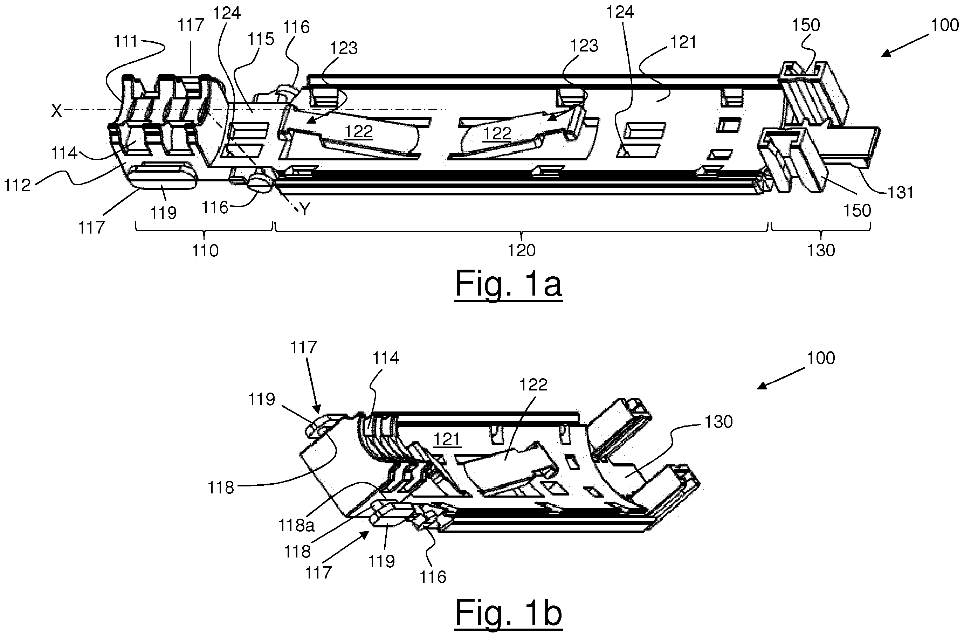

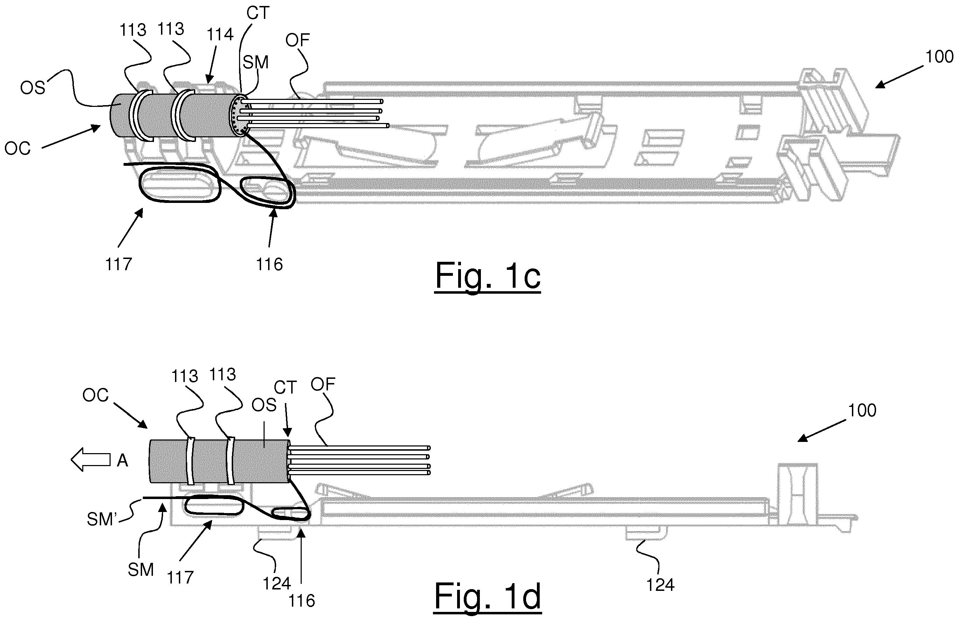

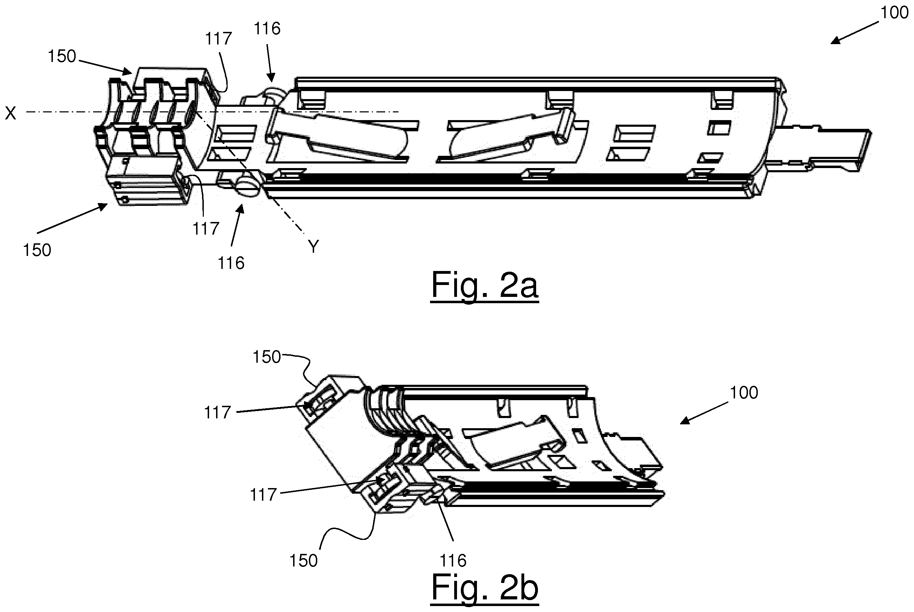

Figures 1a, 1b, 1c, 1d, 2a and 2b are various views of a device 100 according to a first example of the present invention in different configurations. It should be remarked that an optical cable is shown only in Figures 1c and 1d and in a schematic manner. Also in Figures 1c and 1d the path of the flexible strength members is shown. However, such kind of representation should be deemed as indicative of the strength member path because, in use, the strength members will be turned more strictly to the belay element and to the reel. They will adhere to the respective surfaces as it will be clear from the following description.

The device 100 according to the first example of the present invention is adapted to secure an outer sheath OS of an optical cable OC in at least one point or area and to provide a retention of the flexible strength members SM of the optical cable OC. After description of the device itself, use thereof will be described. In the figures, also optical fiber units OF of the cable OC are shown.

In general terms, the device 100 according to the first example comprises an elongate body comprising (from left to right) a first end part 110, a central part 120 and a second end part 130 (Figure 1 a).

Central part 120 is open channel shaped with an upper concave surface 121 provided with two elastic arms 122 which project upwardly. Each of the arms 122 is provided with a neck 123 at about its free end. The opposed surface of the concave surface is preferably provided with "L" shaped connection feet 124 (Figure 1d) for mounting the device 100 to an enclosure or the like. The device 100 according to the present invention could comprise, in addition to the "L" shaped feet 124 (or as an alternative thereto), any other connection means.

Second end part 130 is a plane elongate plate, possibly provided with a properly shaped projection 131 adapted to cooperate with the above mentioned enclosure or the like. In the embodiment which is shown in Figures 1a, 1b, 1c and 1d two clips 150 are detachable connected to the second end part 130 of the device. Indeed, Figures 2a and 2b show the clips 150 after detachment from the second end part. In the first figures the clips are vertically arranged while in the last figures, they are horizontally arranged. The vertical arrangement can be profitable for manufacturing reasons (possibly the device is made by molding). Possibly, the clips are originally connected to the rest of the device by small easily breakable connecting parts. Providing the (rather small) clips connected to rest of the device is profitable because they can become easily available for a user and the risk to loose them is decreased. In other embodiments, the clips can be provided as separate parts.

The first end part 110 will be disclosed here below in greater detail.

The first end part 110 comprises a seat 111 for the optical cable OC. The seat 111 comprises a concave surface. Concavity of the concave surface of the seat 111 is adapted to house a length of the optical cable OC provided with its outer sheath OS (Figure 1c). An optical cable provided with outer sheath will also be referred to as "sheathed cable", to distinguish it from a cable where the outer sheath has been at least partially removed to extract optical fiber units and flexible strength members.

Preferably, the seat 111 for the optical cable is elevated so that two rather wide opposed lateral surfaces 112 are provided.

Means 113 for securing the outer sheath OS of the cable to the seat 111 are preferably provided. Such means could comprise one or more securing clamps 113. In the example which is shown in the figures, there are provided two securing clamps 113 which are firmly arranged around the outer sheath OS of the cable OC and around a portion of the concave surface of the seat 111. To this end, openings 114 are preferably provided in the seat 111. In this manner, the outer sheath OS is firmly secured to the seat 111.

Preferably, the seat 111 runs along only a portion of the length of the first part 110. In other words, there is provided a transition part 115 between the elevated seat 111 and the central part 120.

According to the first example of the present invention, there is provided at least a belay element 116 laterally projecting from a lateral surface of said transition part 115. In the first example, a belay element 116 projects outwardly from a lateral surface of the transition part 115 and a further belay element 116 projects outwardly from the opposed lateral surface of the transition part 115.

Preferably, the two belay elements 116 have the same shape and size. Preferably, each of them is shaped as a mushroom with a stem and an enlarged head. The enlarged head provides a sort of barrier preventing unwinding of flexible strength members when they are winded (at least partially) on the stem.

According to the first example of the present invention, there is provided at least a reel 117, laterally projecting from a lateral surface 112 of said seat 111. Reel 117 projects outwardly from a lateral surface 112 of the seat 111 and a further reel 117 projects outwardly from the opposed lateral surface 112 of the seat 111.

Preferably, the two reels 117 have the same shape and size. Preferably, each of them is shaped as an elongate mushroom with a stem 118 and an enlarged longitudinally elongated head 119. Therefore, the reel stem 118 comprises two parallel surfaces 118a which extend in a longitudinal direction (direction X).

Finally, there is provided at least one clip 150 (Figures 2a and 2b). Each clip 150 is configured for cooperating with a reel 117. Therefore, in case of two reels 117, there may be provided two clips 150.

Each of the clips 150 has a "C" cross-section. Preferably, each clip 150 is elongate. Preferably, each clip 150 has a length which is about the length of the reel 117. Each clip 150 is configured to cooperate with a reel 117 by elastically pressing towards the two parallel surfaces 118a of the reel stem for avoiding unrolling of the flexible strength members from the reel stem 118.

The device 100, including the clip 150, can be profitably made in a polymeric material, preferably a thermoplastic material. The thermoplastic material preferably comprises an ABS (Acrylonitrile butadiene styrene) polymer or the like. In one embodiment, the material is 40% glass filled nylon 6.

The device 100 according to the first example is adapted to be used in connection with an enclosure. As said above, the device 100 according to the first example can also be made integral with an enclosure.

Use of the device 100 according to the first example of the present invention will now be described.

The outer sheath OS of an optical cable is cut (see "CT" in Figures 1c and 1d) so that at least a portion of its flexible strength members SM can be extracted. The extracted flexible strength members are then cut at a certain length. Such length could be some centimeters, such as ten centimeters for instance. Longer or shorter lengths are also equally advantageously managed according to the present invention.

The outer sheath downwardly the cut edge CT can be completely removed or can be partially removed. Figures 1c and 1d show the first case where the optical fiber units become visible without protection.

The cable OC is fixed to the device 100 by securing the outer sheath OS to the seat 111 by one or more securing clamps 113 firmly serrated around the sheath OS and the seat 111. Profitably, the cable OC is arranged so that the cut edge CT of the outer sheath OS is about at the end of the seat 111. In principle, the cut edge can be also in an advanced position with respect to the end of the seat 111 but it is preferable that the belay element(s) 116 is(are) arranged in an advanced position with respect to the cut edge CT.

In one version, the belay element 116 is positioned beyond the seat 111 with respect to the cut edge CT.

The flexible strength members are deviated from a direction parallel to longitudinal direction X to direction Y, given by the position of belay element 116.

The flexible strength members SM are strictly turned around at least a portion of the periphery of the stem of the belay element(s) 116. Preferably, at least one complete turn of flexible strength members SM around the belay element(s) 116 is made. The numbers of turns made around the belay element(s) may depend on the length of the flexible strength members and/or on the amount of such strength members. If a large number of strength members is managed, it could be inconvenient to make several turns.

The flexible strength members SM leaving the belay element(s) 116 are looped around the elongated stem 118 of the reel(s) 117. At least one turn is made. Preferably, two or more turns are made. The number of turns also depends on the length of flexible strength members SM. If the length is long, several turns can be made around the periphery of the stem 118 of the reel(s) 117. The numbers of turns made around the periphery of the stem 118 of the reel(s) may also depend on the amount of such strength members. If a large number of strength members is managed, it could be inconvenient to make several turns.

Preferably, an operator can maintain the flexible strength members SM around the periphery of the stem 118 of the reel(s) 117 by keeping the end tail SM' with two fingers and pulling it away from the reel.

The final step comprises slidingly fitting the "C" shaped clip 150 on the reel 117. In this manner, the facing teeth of the clip 150 push the looped flexible strength members SM against the two parallel surfaces 118a of the reel stem 118 for avoiding unrolling of the flexible strength members from the reel stem 118.

It is realized that if the cable OC is pulled in the direction A (Fig. 1d), the flexible strength members SM from belay element(s) 116 to the cut edge CUT and, ultimately, the flexible strength members from the reel(s) 117 to belay element(s) 116 become tensioned and provide an additional retain force for retaining the optical cable OC.

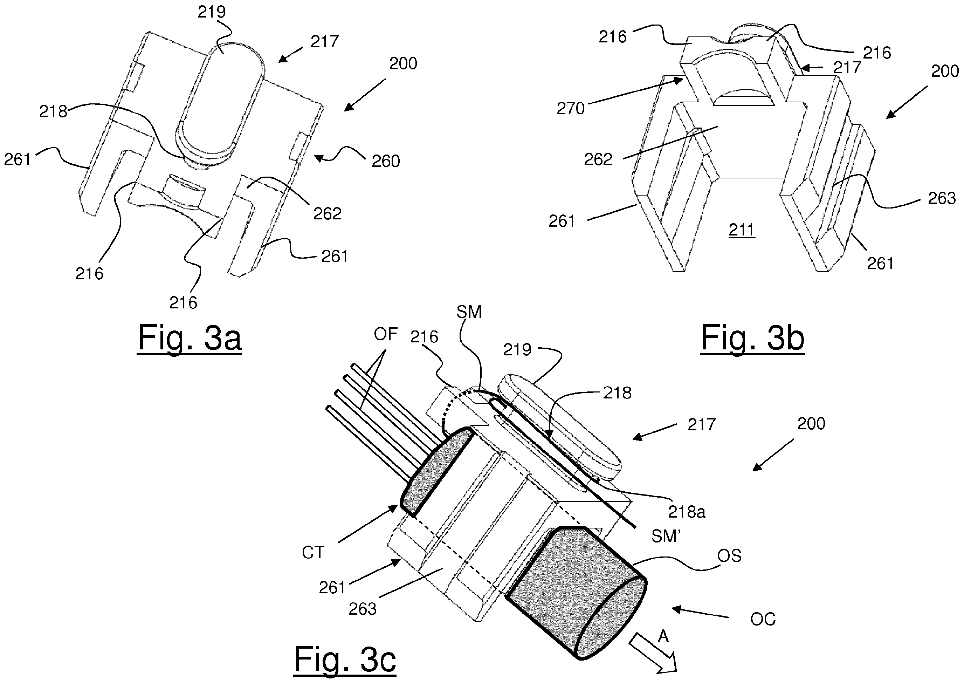

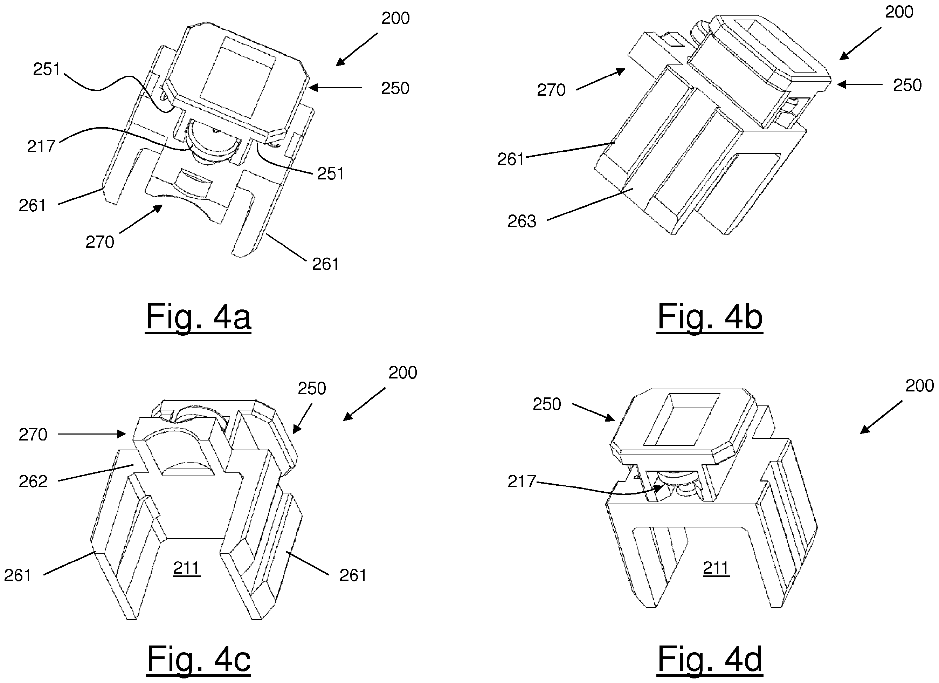

Figures 3a, 3b, 3c, 4a, 4b, 4c and 4d are various views of a device 200 according to a second example of the present invention in different configurations. It should be remarked that an optical cable is shown only in Figure 3c and in a schematic manner. Also in Figure 3c the path of the flexible strength members is shown. However, such kind of representation should be deemed as indicative of the strength member path because, in use, the strength members will be turned more strictly to the belay element and to the reel. They will adhere to the respective surfaces as it will be clear from the following description.

The device according to the second example of the present invention is adapted to secure an outer sheath OS of optical cable OC in at least one point or area and to provide a retention of the flexible strength members SM of the optical cable OC. As for the first example, after description of the device 200 itself, use thereof will be described.

In general terms, the device 200 comprises a bridge-shaped element 260 with two opposed sheath securing legs 261 and one span 262 connecting the two legs 261. The legs 261 and spam 262 form a seat 211. The device 200 according to the second example further comprises belay element(s) 216, a reel 217 and a clip 250 cooperating with the reel 217.

At it is shown in the various figures, an overhang shelf 270 is provided. Such overhang shelf 270 is projecting in one direction from the span 262. Both the upper surface and the lower surface of the overhang shelf are, at least for a certain length, channeled (see, in particular, Figure 3b). In this manner, both the so shaped free end corners 216 can act as belay elements as it will be better explained below.

The device 200, similarly to the device 100, comprises a reel 217. The reel 217 is provided on the upper surface of the span 262. Preferably, the reel 217 is shaped as an elongate mushroom with a stem 218 and an enlarged longitudinally elongated head 219. Therefore, the reel stem 218 comprises two parallel surfaces 218a which extend in a longitudinal direction.

Indeed, the clip 250 is as the clip 150 of the first example. For a better management of the clip 250, it could be provided with a larger head forming two lateral wings 251. However, if room is not available or scarce, the clip 250 could have a head without any lateral wings 251.

The device 200, including the clip 250, can be profitably made in a polymeric material, preferably a thermoplastic material. The thermoplastic material preferably comprises an ABS (Acrylonitrile butadiene styrene) polymer or the like. In one embodiment, the material is 40% glass filled nylon 6.

The device 200 is adapted to be used in connection with an enclosure. Preferably, the device 200 according to the second example can be pushed in a properly shaped cavity or housing of an enclosure. To this purpose, the legs 261 can be shaped with guiding channels 263. However, the device 200 can also be made integral with an enclosure.

Use of the device 200 will now be described.

The outer sheath OS of an optical cable is cut (see "CT" in Fig. 3c) so that at least a portion of its flexible strength members SM can be extracted. The extracted flexible strength members SM are then cut at a certain length. Such length could be some centimeters, such as ten centimeters for instance. Longer or shorter lengths are also equally advantageously managed according to the present invention.

The outer sheath OS downwardly the cut can be completely removed (as in Figure 3c) or can be partially removed.

The optical cable OC is fixed to the device 200 by pressing the bridge-shaped element 260 on the outer sheath OS. Profitably, the cable OC is arranged so that the cut edge CT of the outer sheath OS is about at the end of the bridge-shaped element 260. In principle, the cut edge CT can be also in an advanced position with respect to the end of the bridge-shaped element 260.

In one version, the belay element 216 is arranged in an advanced position with respect to the cut edge CT.

The flexible strength members are turned around at least a portion of the corner belay element 216. The numbers of turns made around the belay element(s) may depend on the length of the flexible strength members and/or on the amount (namely, on the number) of such strength members. If a large number of strength members is managed, it could be inconvenient to make several turns.

The flexible strength members SM leaving the belay element 216 are looped around the elongated stem 218 of the reel 217. At least one turn is made. Preferably, two or more turns are made. The number of turns also depends on the length of flexible strength members SM. If the length is long, several turns can be made around the periphery of the stem 218 of the reel 217. However, the numbers of turns made around the stem 218 may also depend on the amount (namely, number) of such strength members. If a large number of strength members is managed, it could be inconvenient to make several turns.

Preferably, an operator can maintain the flexible strength members SM around the periphery of the stem 218 of the reel 217 by keeping the end tail with two fingers and pulling it away from the reel 217.

The final step comprises slidingly fitting the "C" shaped clip 250 on the reel 217. In this manner, the facing teeth of the clip 250 push the looped flexible strength members SM against the two parallel surfaces 218a of the reel stem 218 for avoiding unrolling of the flexible strength members from the reel stem 118.

It is realized that if the cable OC is pulled in the direction A, the flexible strength members SM from belay element 216 to the cut edge CT and, ultimately, the flexible strength members from the reel 217 to belay element 216 become tensioned and provide an additional retain force for retaining the cable OC.

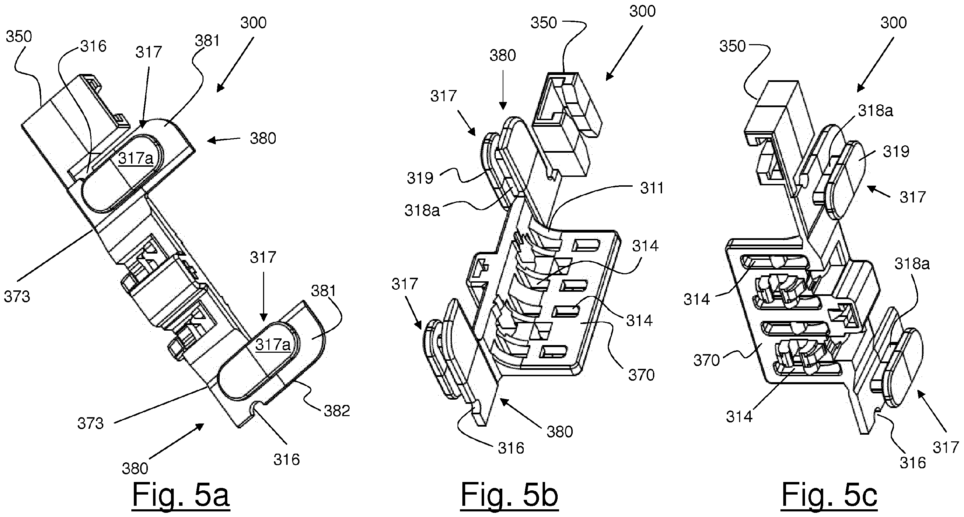

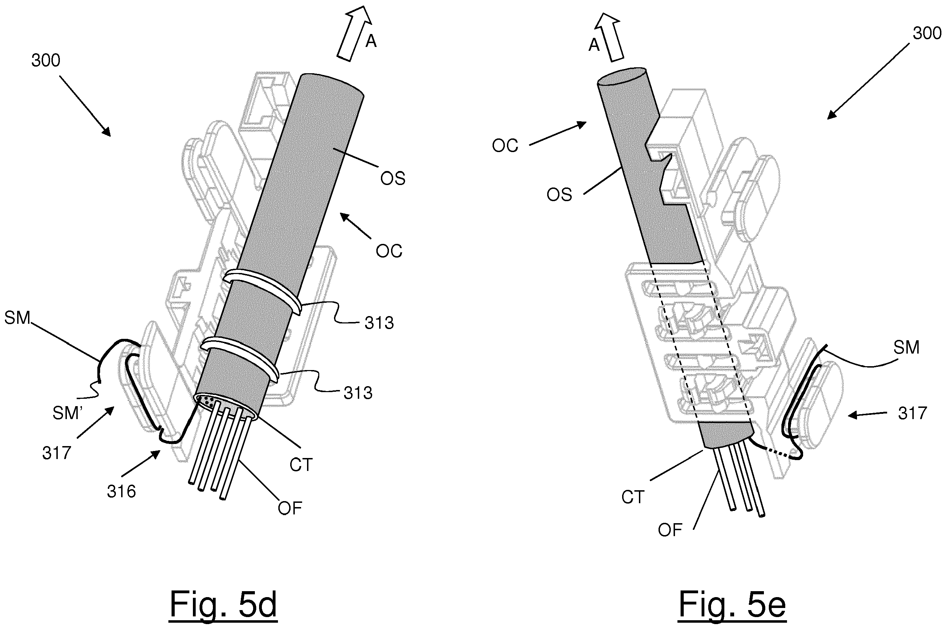

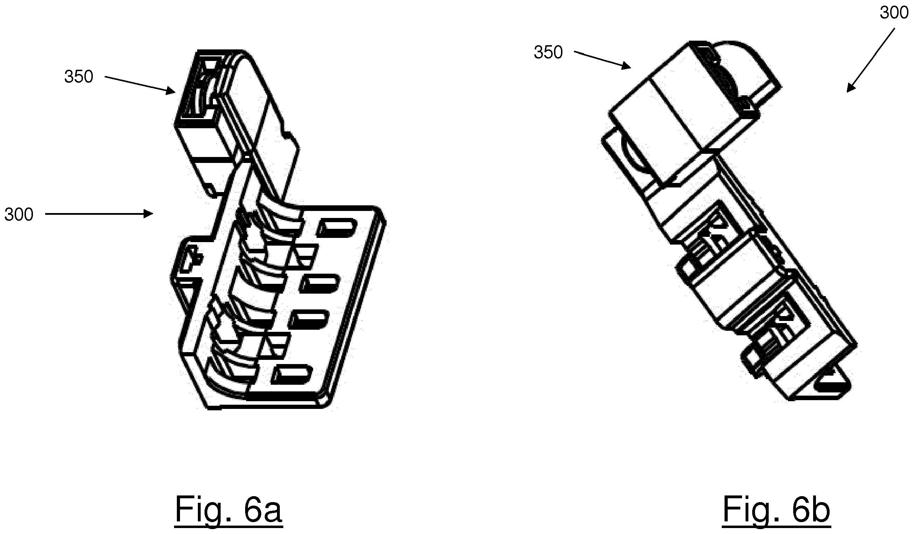

Figures 5a, 5b, 5c, 5d, 5e, 6a and 6b are various views of a device according to a third example of the present invention in different configurations. It should be remarked that an optical cable is shown only in Figures 5d and 5e in a schematic manner. Also in Figures 5d and 5e the path of the flexible strength members is shown. However, such kind of representation should be deemed as indicative of the strength member path because, in use, the strength members will be turned more strictly to the belay element and to the reel. They will adhere to the respective surfaces as it will be clear from the following description.

The device 300 according to the third example of the present invention is adapted to secure an outer sheath OS of optical cable OC in at least one point or area and to provide a retention of the flexible strength members SM of the optical cable OC. As for the first and second example 100, 200, after description of the device itself, use thereof will be described.

In general terms, the device 300 comprises a central area 370 providing a support for a sheathed cable and at least one end 380 comprising a belay element 316 and a reel 317. Profitably, as it is shown in Figures 5a-5c, the device 300 according to the third example comprises two ends 380 connected to the central area 370, each of them comprising a belay element 316 and a reel 317.

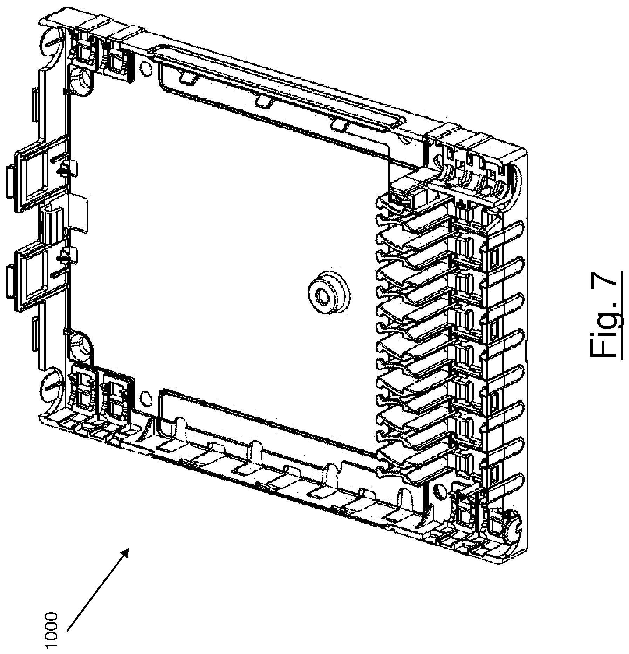

The central part 370 can be "L" shaped with rounded surfaces at the "L" corner so that a concave surface seat 311 is provided for the sheathed cable OC. Through holes 314 are provided for securing clamps 313 adapted to secure the sheathed optical cable OC to the L-shaped central part 370. The central part 370 may also comprise any means for connecting the device 300 of the third example to an enclosure as the enclosure 1000 of Figure 7. Such means will not further described.

As said above, the device 300 comprises at least one end 380, connected to the central area 370, with a belay element 316 and a reel 317. In one preferred embodiment, there are provided two substantially identical ends 380. Profitably, each of the ends 380 is connected to the central area 370 by a weakening line 373 so that one of the two ends 380 could be separated by the central area 370 and only one end 380 is maintained. Only one end 380 will be described below.

In the embodiment which is shown in Figures 5a, 5b, 5c, 5d and 5e one clip 350 is detachable connected to one of said ends 380 of the device. Indeed, Figures 6a and 6b show the clip 350 mounted and detached from the end 380. Possibly, the clip is originally connected to the rest of the device by one small easily breakable connecting part. Providing the (rather small) clip connected to rest of the device is profitable because it can become easily available for a user and the risk to loose it is decreased. In other embodiments, the clip can be provided as separate part.

The end 380 comprises a surface 381 with an external edge 382 which is the edge which is more distant from the central area 370. The external edge 370 comprises a notch 316. Preferably, the notch 316 has a shape of a portion of a circle as clearly shown in Figure 5a.

Projecting from a side of said surface 381 there is provided a reel 317 which is similar to the reel 117, 217 of the first and second examples, respectively. Preferably, the reel 317 is shaped as an elongate mushroom with a stem 318 and an enlarged longitudinally elongated head 319. Therefore, the reel stem 318 comprises two parallel surfaces 318a which extend in a longitudinal direction.

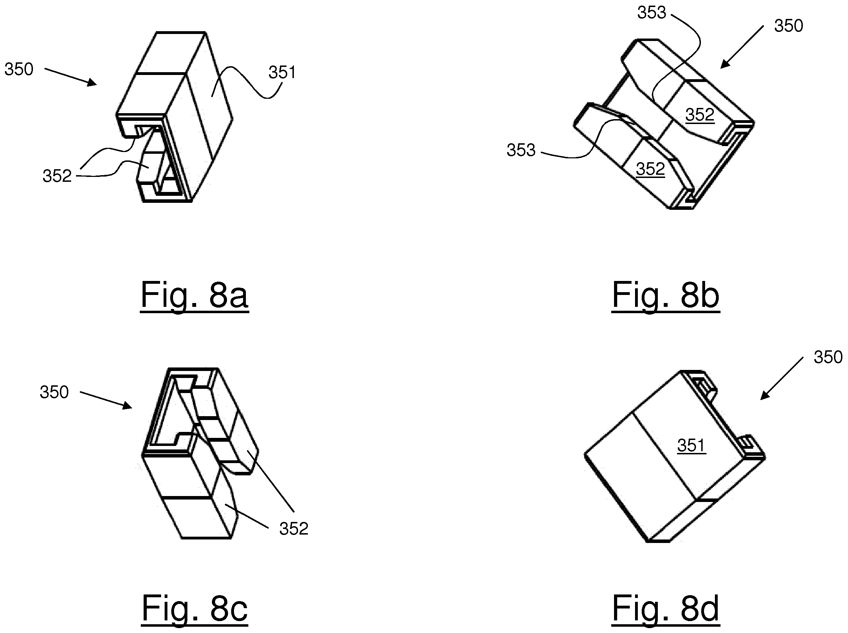

Indeed, the clip 350 is similar to the clip 150, 250 of the first and second examples 100, 200 and it is shown in Figures 8a, 8b, 8c and 8d.

Clip 350 is "C" shaped with two facing teeth 352 and a main surface 351. The teeth 352 become closer in their central part where two planar and parallel surfaces 353 are formed (see Figure 8d). Preferably, the distance between parallel surfaces 353 corresponds to, or is shorter than, the distance between the parallel surfaces 318a of the stem 318.

The device 300, including the clip 350, can be profitably made in a polymeric material, preferably a thermoplastic material. The thermoplastic material preferably comprises an ABS (Acrylonitrile butadiene styrene) polymer or the like. In one embodiment, the material is 40% glass filled nylon 6.

The device 300 is adapted to be used in connection with an enclosure. Figure 7 shows, by way of example, a portion of an enclosure 1000 to which the device 300 of the present invention could be mounted.

However, the device 300 can also be made integral with the enclosure 1000 of Figure 7 or with any other enclosure.

Use of the device according to the third example of the present invention will now be described.

The outer sheath OS of an optical cable OC is cut (see CT in Figures 5d and 5e) so that at least a portion of its flexible strength members SM can be extracted. The extracted flexible strength members SM are then cut at a certain length. Such length could be some centimeters, such as ten centimeters for instance. Longer or shorter lengths are also equally advantageously managed according to the present invention. In other words, excess lengths of flexible strength members SM can be tolerated so that there is not the need to cut the strength members at a precise length.

The outer sheath downwardly the cut edge CT can be completely removed or can be partially removed.

The cable OC is fixed to the device 300 by securing the outer sheath OS to the concave surface seat 311 by one or more securing clamps 313 firmly serrated around the sheath OS and the seat 311. Profitably, the cable is arranged so that the cut edge of the outer sheath OS is about at the end of the seat 311.

In principle, the cut edge can be also in an advanced position with respect to the end of the seat 311 (i.e., the end of the central part).

In one version, the notch 316 (forming the belay element in the third example) is arranged in an advanced position with respect to the cut edge CT of the optical cable OC.

Preferably, the belay element 316 is positioned beyond the seat 311 with respect to the cut edge CT of the optical cable OC.

The flexible strength members SM are passed in the notch 316.

The flexible strength members leaving the notch 316 are looped around the elongated stem 318 of the reel 317. At least one turn of flexible strength members is made. Preferably, two or more turns are made. The number of turns also depends on the length of flexible strength members SM. If the length is long, several turns can be made around the periphery of the stem 318 of the reel 317. The numbers of turns made around the elongated stem may depend on the length of the flexible strength members and/or on the amount (namely, on the number) of such strength members. If a large number of strength members is managed, it could be inconvenient to make several turns.

Preferably, an operator can maintain the flexible strength members SM around the periphery of the stem 318 of the reel 317 by keeping the end tail with two fingers and pulling it away from the reel.

The final step comprises slidingly fitting the "C" shaped clip 350 (Figures 6a and 6b) on the reel 317. In this manner, the facing teeth 352 of the clip 350 push the looped flexible strength members SM against the two parallel surfaces 318a of the reel stem for avoiding unrolling of the flexible strength members from the reel stem 118.

It is realized that if the optical cable OC is pulled in the direction A (Figures 5d and 5e), the flexible strength members SM from notch 316 to the cut edge CT and, ultimately, the flexible strength members from the reel 317 to notch 316 become tensioned and provide an additional retain force for retaining the optical cable.

Advantageously, the present invention provides a device (which can be embodied as a separate component (to be connected to an enclosure) or as an enclosure) which can be managed in a convenient way.

In addition, the retention force provided by the flexible strength members SM, the belay element(s) 116, 216, 316 and reel(s) 117, 217, 317 is higher than the retention force provided by prior art arrangements.

In addition, profitably, the length of flexible strength members is not critical as in the prior art arrangements. This means that excess flexible strength members can be accommodated by making one (or further) turns on the belay element(s) and/or on the reel(s). This is advantageous for personnel who are installing the cable.

In addition, when the length of the flexible strength members is excessive and it is not convenient to make several turns on the belay element(s) and/or on the reel(s) (because such belay element(s) and reel(s) will become too bulky), the length in excess can be cut at the end of the process, when the clip is in position and the flexible strength members can not become unrolled.

## Claims

1. A device (100, 200, 300) for securing and retaining an optical cable (OC), said optical cable (OC) mainly extending along a longitudinal direction (X) and comprising optical fiber units (OF), flexible strength members (SM) and an outer sheath (OS), said device (100, 200, 300) comprising:
a reel (117, 217, 317) configured to receive at least one turn of said strength members (SM); and
a clip (150, 250, 350) configured to cooperate with said reel (117, 217, 317) for maintaining said at least one turn of said strength members (SM) around said reel (117),
**characterized in that** said device further comprises a belay element (116, 216, 316) configured to deviate said flexible strength members (SM) of the optical cable (OC) from said longitudinal direction (X) towards said reel (117, 217, 317).

2. The device (100, 200, 300) of claim 1, further comprising a seat (111, 211, 311) for said optical cable outer sheath (OS), said belay element (116, 216, 316) being configured to receive at least a portion of a turn of said strength members (SM).

3. The device (100, 200, 300) of claim 1, wherein said strength members (SM) exit from a cut edge (CT) of the outer sheath (OS) of said optical cable (OC), wherein said belay element (116, 216, 316) is at a distance from said seat (111, 211, 311) and it is positioned beyond said seat (111, 211, 311) with respect to said cut edge (CT).

4. The device (100, 200, 300) of any of preceding claims, wherein said belay element (116, 216, 316) comprises a projecting element (116, 216) or a notch (316).

5. The device (100, 200, 300) of claim 4, wherein said belay element (116) comprises a mushroom-shaped element with a stem and an enlarged head.

6. The device (100, 200, 300) of any of preceding claims, wherein said reel (117, 217, 317) comprises an elongate stem (118, 218, 318) and an elongate enlarged head (119, 219, 319).

7. The device (100, 200, 300) of claim 6, wherein said elongate stem (118, 218, 318) of the reel (117, 217, 317) comprises two elongate substantially parallel surfaces (118b).

8. The device (100, 200, 300) of claim 7, wherein said clip (150, 250, 350) is substantially "C" shaped and comprises facing teeth (352) which, in use, press towards the parallel surfaces of the stem (118, 218, 318) of the reel (117, 217, 317) for avoiding unrolling of the flexible strength members from the reel stem (118, 218, 318).

9. The device (100, 200, 300) according to any of preceding claims, comprising through holes (114, 314) for securing clamps (113, 313) in order to secure said optical cable outer sheath (OS) to said seat (111, 211, 311).

10. An assembly comprising:
a device (100, 200, 300) according to any of claims 1 to 9, and an optical cable (OC) wherein strength members (SM) exiting from a cut edge (CT) of the outer sheath (OS) of said optical cable (OC) are arranged around said reel (117, 217, 317), and wherein said clip (150, 250, 350) is fittable on said reel (117, 217, 317) for avoiding unrolling of said strength members (SM) from said reel (117) .

11. The assembly of claim 10, wherein said belay element (116, 216, 316) is arranged so that said strength members (SM) deviate from the longitudinal direction of the optical cable at the seat (111, 211, 311) where it is secured to the device (100, 200, 300).

12. A method for securing and retaining an optical cable (OC), wherein the optical cable mainly extends along a longitudinal direction (X) and comprises optical fiber units (OF), flexible strength members (SM) and an outer sheath (OS), the method comprising the steps of:
- cutting the outer sheath (OS) of the cable and extracting at least a portion of strength members (SM);
- securing (113, 313) the optical cable (OC) to a device (100, 200, 300), wherein said device further comprises a belay element (116, 216, 316);
- reeling said at least a portion of flexible strength members (SM) around a reel of the device, thus forming one or more turns of flexible strength members around a periphery of said reel, wherein said belay element is configured to deviate said flexible strength members from said longitudinal direction (X) towards said reel;
- fitting a clip on said reel for maintaining said one or more turns of flexible strength members around the periphery of said reel.

13. The method of claim 12, comprising the step of turning said at least one portion of flexible strength members (SM) around said belay element of the device.

14. The method of claim 13, wherein said turning comprises winding said flexible strength members (SM) around a projecting belay element (106, 206).

15. The method of any claims 13-14, wherein said turning comprises inserting said strength members (SM) in a notch (316).

16. The method of any of claims 12-15, wherein said reeling comprises reeling said at least a portion of strength members (SM) around an elongate reel.

17. The method of claim 16, wherein said fitting a clip on said reel comprises slidingly fitting a C shaped clip on said elongate reel so that free ends of said C shaped clip resiliently cooperate with a peripheral surface of said elongate reel.

## Patentansprüche

1. Eine Vorrichtung (100, 200, 300) zum Befestigen und Halten eines optischen Kabels (OC), wobei sich das optische Kabel (OC) hauptsächlich entlang einer Längsrichtung (X) erstreckt und optische Fasereinheiten (OF), flexible Festigkeitselemente (SM) und eine äußere Hülle (OS) aufweist, wobei die genannte Vorrichtung (100, 200, 300) umfasst:
eine Spule (117, 217, 317), die so konfiguriert ist, dass sie mindestens eine Windung der Festigkeitselemente (SM) aufnimmt; und
einen Clip (150, 250, 350), der so konfiguriert ist, dass er mit der genannten Spule (117, 217, 317) für die Aufrechterhaltung der mindestens einen Windung der Festigkeitselemente (SM) um die Rolle (117) kooperiert, **dadurch gekennzeichnet, dass** die Vorrichtung ferner ein Sicherungselement (116, 216, 316) umfasst, das so konfiguriert ist, dass es die flexiblen Festigkeitselemente (SM) des optischen Kabels (OC) aus der genannten Längsrichtung (X) zu der genannten Rolle (117, 217, 317) ablenkt.

2. Die Vorrichtung (100, 200, 300) nach Anspruch 1 umfasst ferner einen Sitz (111, 211, 311) für den Außenmantel (OS) des optischen Kabels, wobei das Sicherungselement (116, 216, 316) so konfiguriert ist, dass es mindestens einen Teil einer Windung der Festigkeitselemente (SM) aufnimmt.

3. Vorrichtung (100, 200, 300) nach Anspruch 1, bei der die Festigkeitselemente (SM) aus einer Schnittkante (CT) des Außenmantels (OS) des optischen Kabels (OC) austreten, wobei sich das Sicherungselement (116, 216, 316) in einem Abstand von dem Sitz (111, 211, 311) befindet und es in Bezug auf die Schnittkante (CT) über den Sitz (111, 211, 311) hinaus positioniert ist.

4. Die Vorrichtung (100, 200, 300) eines der vorhergehenden Ansprüche, wobei das Sicherungselement (116, 216, 316) ein vorstehendes Element (116, 216) oder eine Kerbe (316) aufweist.

5. Die Vorrichtung (100, 200, 300) des Anspruchs 4, bei der das Sicherungselement (116) ein pilzförmiges Element mit einem Heck und einen vergrößerten Kopf umfasst.

6. Die Vorrichtung (100, 200, 300) eines der vorhergehenden Ansprüche, wobei die Rolle (117, 217, 317) ein längliches Heck (118, 218, 318) und einen länglichen, vergrößerten Kopf (119, 219, 319) aufweist.

7. Vorrichtung (100, 200, 300) nach Anspruch 6, wobei das längliche Heck (118, 218, 318) der Spule (117, 217, 317) zwei längliche, im Wesentlichen parallele Flächen (118b) aufweist.

8. Vorrichtung (100, 200, 300) nach Anspruch 7, bei der die Klammer (150, 250, 350) im Wesentlichen "C"-förmig ist und einander zugewandte Zähne (352) aufweist, die im Gebrauch gegen die parallelen Oberflächen des Hecks (118, 218, 318) der Rolle (117, 217, 317) drücken, um ein Abrollen der flexiblen Festigkeitselemente vom Rollenheck (118, 218, 318) zu vermeiden.

9. Die Vorrichtung (100, 200, 300) nach einem der vorhergehenden Ansprüche, die Durchgangslöcher (114, 314) zur Befestigung von Klemmen (113, 313) umfasst, um den Außenmantel (OS) des optischen Kabels an dem Sitz (111, 211, 311) zu befestigen.

10. Eine Baugruppe bestehend aus:
einer Vorrichtung (100, 200, 300) nach einem der Ansprüche 1 bis 9 und einem optischen Kabel (OC), wobei Festigkeitselemente (SM), die aus einer Schnittkante (CT) des Außenmantels (OS) des optischen Kabels (OC) austreten, um die Spule (117, 217, 317) herum angeordnet sind, und wobei die Klemme (150, 250, 350) auf die Spule (117, 217, 317) aufsetzbar ist, um ein Abrollen der Festigkeitselemente (SM) von der Spule (117) zu vermeiden.

11. Die Anordnung nach Anspruch 10, bei der das Sicherungselement (116, 216, 316) so angeordnet ist, dass die Festigkeitselemente (SM) von der Längsrichtung des optischen Kabels an dem Sitz (111, 211, 311) abweichen, an dem es an der Vorrichtung (100, 200, 300) befestigt ist.

12. Verfahren zum Befestigen und Halten eines optischen Kabels (OC), wobei sich das optische Kabel hauptsächlich entlang einer Längsrichtung (X) erstreckt und optische Fasereinheiten (OF), flexible Festigkeitselemente (SM) und einen Außenmantel (OS) umfasst, wobei das Verfahren die folgenden Schritte umfasst
- Schneiden des Außenmantels (OS) des Kabels und Herausziehen mindestens eines Teils der Festigkeitselemente (SM);
- Befestigen (113, 313) des optischen Kabels (OC) an einer Vorrichtung (100, 200, 300), wobei die Vorrichtung ferner ein Sicherungselement (116, 216, 316) umfasst;
- Aufwickeln des mindestens einen Teils der flexiblen Festigkeitselemente (SM) um eine Spule der Vorrichtung, wodurch eine oder mehrere Windungen der flexiblen Festigkeitselemente um einen Umfang der Spule gebildet werden, wobei das Sicherungselement so konfiguriert ist, dass es die flexiblen Festigkeitselemente von der Längsrichtung (X) zur Spule hin ablenkt;
- Anbringen einer Klammer an der Spule, um die eine oder mehrere Windungen der flexiblen Festigkeitselemente um den Umfang der Spule herum zu halten.

13. Verfahren nach Anspruch 12, umfassend den Schritt des Drehens des mindestens einen Teils der flexiblen Festigkeitselemente (SM) um das Sicherungselement der Vorrichtung.

14. Das Verfahren nach Anspruch 13, wobei das Drehen das Wickeln der flexiblen Festigkeitselemente (SM) um ein vorstehendes Sicherungselement (106, 206) umfasst.

15. Verfahren nach den Ansprüchen 13-14, wobei das Drehen das Einfügen der Festigkeitselemente (SM) in eine Kerbe (316) umfasst.

16. Verfahren nach einem der Ansprüche 12-15, wobei das Aufwickeln das Aufwickeln zumindest eines Teils der Festigkeitselemente (SM) um eine längliche Rolle umfasst.

17. Verfahren nach Anspruch 16, wobei das Anbringen einer Klammer auf der Spule das gleitende Anbringen einer C-förmigen Klammer auf der länglichen Spule umfasst, so dass die freien Enden der C-förmigen Klammer elastisch mit einer Umfangsfläche der länglichen Spule zusammenwirken.

## Revendications

1. Dispositif (100, 200, 300) pour arrimer et retenir un câble optique (OC), ledit câble optique (OC) s'étendant principalement suivant une direction longitudinale (X) et comprenant des unités de fibre optique (OF), des organes de résistance (SM) flexibles et une gaine extérieure (OS), ledit dispositif (100, 200, 300) comprenant :
une bobine (117, 217, 317) configurée pour recevoir au moins un tour desdits organes de résistance (SM) ; et
une pince (150, 250, 350) configurée pour coopérer avec ladite bobine (117, 217, 317) pour maintenir ledit au moins un tour desdits organes de résistance (SM) autour de ladite bobine (117),
**caractérisé en ce que** ledit dispositif comprend en outre un élément d'assurage (116, 216, 316) configuré pour dévier lesdits organes de résistance (SM) flexibles du câble optique (OC) de ladite direction longitudinale (X) vers ladite bobine (117, 217, 317).

2. Dispositif (100, 200, 300) selon la revendication 1, comprenant en outre un siège (111, 211, 311) pour ladite gaine extérieure (OS)de câble optique, ledit élément d'assurage (116, 216, 316) étant configuré pour recevoir au moins une portion d'un tour desdits organes de résistance (SM).

3. Dispositif (100, 200, 300) selon la revendication 1, dans lequel lesdits organes de résistance (SM) sortent d'un bord tranché (CT) de la gaine extérieure (OS) dudit câble optique (OC), dans lequel ledit élément d'assurage (116, 216, 316) est à une distance dudit siège (111, 211, 311) et est positionné au-delà dudit siège (111, 211, 311) par rapport audit bord tranché (CT).

4. Dispositif (100, 200, 300) selon l'une quelconque des revendications précédentes, dans lequel ledit élément d'assurage (116, 216, 316) comprend un élément saillant (116, 216) ou une encoche (316).

5. Dispositif (100, 200, 300) selon la revendication 4, dans lequel ledit élément d'assurage (116) comprend un élément en forme de champignon avec une tige et une tête agrandie.

6. Dispositif (100, 200, 300) selon l'une quelconque des revendications précédentes, dans lequel ladite bobine (117, 217, 317) comprend une tige (118, 218, 318) allongée et une tête (119, 219, 319) agrandie allongée.

7. Dispositif (100, 200, 300) selon la revendication 6, dans lequel ladite tige (118, 218, 318) allongée de la bobine (117, 217, 317) comprend deux surfaces allongées sensiblement parallèles (118b).

8. Dispositif (100, 200, 300) selon la revendication 7, dans lequel ladite pince (150, 250, 350) est sensiblement en forme de « C » et comprend des dents en regard (352) qui, en utilisation, appuient vers les surfaces parallèles de la tige (118, 218, 318) de la bobine (117, 217, 317) pour éviter de dérouler les organes de résistance flexibles de la tige (118, 218, 318) de bobine.

9. Dispositif (100, 200, 300) selon l'une quelconque des revendications précédentes, comprenant des trous traversants (114, 314) pour arrimer des colliers (113, 313) afin d'arrimer ladite gaine extérieure (OS) de câble optique audit siège (111, 211, 311) .

10. Ensemble comprenant :
un dispositif (100, 200, 300) selon l'une quelconque des revendications 1 à 9, et un câble optique (OC) dans lequel des organes de résistance (SM) sortant d'un bord tranché (CT) de la gaine extérieure (OS) dudit câble optique (OC) sont agencés autour de ladite bobine (117, 217, 317), et dans lequel ladite pince (150, 250, 350) est ajustable sur ladite bobine (117, 217, 317) pour éviter de dérouler lesdits organes de résistance (SM) de ladite bobine (117).

11. Ensemble selon la revendication 10, dans lequel ledit élément d'assurage (116, 216, 316) est agencé de sorte que lesdits organes de résistance (SM) dévient de la direction longitudinale du câble optique au niveau du siège (111, 211, 311) où il est arrimé au dispositif (100, 200, 300).

12. Procédé pour arrimer et retenir un câble optique (OC), dans lequel le câble optique s'étend principalement suivant une direction longitudinale (X) et comprend des unités de fibre optique (OF), des organes de résistance (SM) flexibles et une gaine extérieure (OS), le procédé comprenant les étapes de :
- coupe de la gaine extérieure (OS) du câble et extraction d'au moins une portion d'organes de résistance (SM) ;
- arrimage (113, 313) du câble optique (OC) à un dispositif (100, 200, 300), dans lequel ledit dispositif comprend en outre un élément d'assurage (116, 216, 316) ;
- enroulement de ladite au moins une portion d'organes de résistance (SM) flexibles autour d'une bobine du dispositif, formant ainsi un ou plusieurs tours d'organes de résistance flexibles autour d'une périphérie de ladite bobine, dans lequel ledit élément d'assurage est configuré pour dévier lesdits organes de résistance flexibles de ladite direction longitudinale (X) vers ladite bobine ;
- ajustement d'une pince sur ladite bobine pour maintenir lesdits un ou plusieurs tours d'organes de résistance flexibles autour de la périphérie de ladite bobine.

13. Procédé selon la revendication 12, comprenant l'étape consistant à tourner ladite au moins une portion d'organes de résistance (SM) flexibles autour dudit élément d'assurage du dispositif.

14. Procédé selon la revendication 13, dans lequel ladite action consistant à tourner comprend l'enroulement desdits organes de résistance (SM) flexibles autour d'un élément d'assurage saillant (106, 206) .

15. Procédé selon l'une quelconque des revendications 13 et 14, dans lequel ladite action consistant à tourner comprend l'insertion desdits organes de résistance (SM) dans une encoche (316).

16. Procédé selon l'une quelconque des revendications 12 à 15, dans lequel ledit enroulement comprend l'enroulement de ladite au moins une portion d'organes de résistance (SM) autour d'une bobine allongée.

17. Procédé selon la revendication 16, dans lequel ledit ajustement d'une pince sur ladite bobine comprend l'ajustement coulissant d'une pince en forme de C sur ladite bobine allongée de sorte que des extrémités libres de ladite pince en forme de C coopèrent de façon résiliente avec une surface périphérique de ladite bobine allongée.
